# EUROPEAN PATENT SPECIFICATION

(11) **EP 3 122 540 B1**
(45) Date of publication and mention of the grant of the patent: **20.12.2023**
(21) Application number: 15720423.1
(22) Date of filing: 20.03.2015
(51) Int. Cl.: B29C 64/386, B33Y 50/00, G06F 30/00, G06F 119/18, B29C 67/00

(54) **METHOD AND EQUIPMENT FOR GENERATING A NUMERICAL REPRESENTATION OF A THREE-DIMENSIONAL OBJECT, SAID NUMERICAL REPRESENTATION BEING SUITED TO BE USED FOR MAKING SAID THREE-DIMENSIONAL OBJECT THROUGH STEREOLITHOGRAPHY**
VERFAHREN UND VORRICHTUNG ZUR ERZEUGUNG EINER NUMERISCHEN DARSTELLUNG EINES DREIDIMENSIONALEN OBJEKTS, VERWENDUNG DIESER NUMERISCHEN DARSTELLUNG ZUR HERSTELLUNG DIESES DREIDIMENSIONALEN OBJEKTS DURCH STEREOLITHOGRAPHIE
PROCÉDÉ ET APPAREILLAGE POUR LA PRODUCTION D'UNE REPRÉSENTATION NUMÉRIQUE D'UN OBJET TRIDIMENSIONNEL, LADITE REPRÉSENTATION NUMÉRIQUE ÉTANT APPROPRIÉE POUR ÊTRE UTILISÉE POUR LA FABRICATION DUDIT OBJET TRIDIMENSIONNEL PAR STÉRÉOLITHOGRAPHIE

(30) Priority: 24.03.2014 IT VI20140067
(43) Date of publication of application: 01.02.2017
(73) Proprietor: DWS S.R.L., 36016 Thiene (VI) (IT)
(72) Inventor: MAROZIN, Alessandro, I-36042 Breganze (VI) (IT)
(74) Representative: Studio Torta S.p.A.
(86) International application number: PCT/IB2015/052066
(87) International publication number: WO 2015/145320

(56) References cited:
- SETH ALLEN ET AL: "ON THE COMPUTATION OF PART ORIENTATION USING SUPPORT STRUCTURES IN LAYERED MANUFACTURING", SOLID FREEFORM FABRICATION SYMPOSIUM 1994. UNIVERSITY OF TEXAS, AUSTIN, 1994, pages 259-269, XP055159700,
- C F KIRSCHMAN ET AL: "Computer Aided Design of Support Structures for Stereolithographic Components", PROCEEDINGS OF THE 1991 ASME COMPUTERS IN ENGINEERING CONFERENCE. SANTA CLARA, 1991, XP055159698,
- WEBB DOUGLAS ET AL: "Computer-aided Support Structure Design for Stereolithography Models", PROCEEDINGS OF THE FIFTH INTERNATIONAL CONFERENCE ON RAPID PROTOTYPING - 1994 : JUNE 12 - 15, 1994, THE DAYTON CONVENTION AND EXHIBITION CENTER, DAYTON, OHIO U.S.A. / SPONSORED BY THE RAPID PROTOTYPE DEVELOPMENT LABORATORY, THE MANAGEMENT DEVELOPMENT, June 1994 (1994-06), pages 221-225, XP008173951,

## Description

The present invention concerns a method for generating a set of data representative of the geometry of a three-dimensional object to be produced through stereolithography.

The present invention concerns also a piece of equipment for generating said set of data, as well as a computer program product suited to be loaded in a computer in order to make it suitable for the implementation of said method.

As is known, a stereolithography process consists in making a three-dimensional object through the sequential superimposition of several layers of the same object.

Each layer of the object is obtained through solidification, by selectively exposing to light radiation a material in the liquid or paste state in contact with the previous solidified layer that serves as a support.

Generally, the process requires that supporting elements are provided in order to connect one or more surfaces of the three-dimensional object to corresponding reference surfaces facing them.

Said supporting elements make it possible to avoid the collapse and/or deformation of those areas of the new layers to be solidified that are not directly supported by the already solidified layers.

Said process is controlled by a computer to which a first set of data representative of the geometry of the object to be produced is supplied.

The computer executes a program that adds the supporting elements more or less automatically and generates a second set of data representative of the three-dimensional geometry resulting from the union of the object with the supporting elements.

Said second set of data is then used by the stereolithography device for actually making the object.

Generic examples of the above procedure are given in the publication to Kirschman et al., "Computer Aided Design of Support Structures for Stereolithographic Components" - Proceedings of the 1991 ASME Computers in Engineering Conference - Santa Clara, 1991, and in the publication to Webb et al., "Computer-aided Support Structure Design for Stereolithography Models" - Proceedings of the Fifth International Conference on Rapid Prototyping - 1994: June 12-15, 1994 - The Dayton Convention and Exhibition Center, Dayton, OHIO USA / Sponsored by the Rapid Prototype Development Laboratory, The Management Development, June 1994 (1994-06), pages 221-225. The publication by Allen et. all "ON THE COMPUTATION OF PART ORIENTATION USING SUPPORT STRUCTURES IN LAYERED MANUFACTURING"-Solid Freeform Fabrication Symposium 1994. University of Texas, Austin and the publication "MeshMixer 2.0: Best Newcomer in a Supporting Role?"- at "http://www.extrudable.me/2013/12/28/meshmixer-2-0-best-newcomer-in-a-supporting-role/" also deal with 3D object design.

A drawback of said known method lies in that, often, the supporting elements defined in this way do not have an optimal geometry.

In particular, it may happen that the resisting cross section of the supporting elements is excessive, causing an excessive use of material and increasing the time necessary to make the object, in addition to creating more difficulties when the object is cleaned at the end of the process.

In other cases, for example at the level of especially critical areas of the object, it may happen that the resisting cross section of the respective supporting elements is insufficient and causes damage to the object during its production. Furthermore, it should be considered that the geometry of the supporting elements depends also on the material used to make the three-dimensional object.

It can therefore happen that, once having generated the supporting elements based on a given material to be used, the operator successively decides to change the material, thus making it necessary to modify the supporting elements.

In the cases described above, according to the known technique the operator modifies the geometry of the object resulting after the addition of the supporting elements by adding or removing material in the areas corresponding to the supporting elements, these operations being carried out by means of a suitable 3D modeller that transfers the corresponding modifications to the second set of data.

The operation just mentioned above poses the drawback that it is rather complicated and requires a considerable calculation time.

A known alternative consists in modifying the parameters used by the program for generating the supporting elements before defining the latter and successively re-generating the second set of data. However, said alternative requires in any case a first generation of the second set of data and, furthermore, does not allow the supporting elements to be modified individually.

The present invention intends to overcome the drawbacks mentioned above that belong to the known art.

In particular, it is the object of the present invention to provide a method for generating a numerical representation of a three-dimensional object provided with supporting elements that allows the operator to easily modify the supporting elements.

It is a further object of the present invention to provide a method that allows the operator to modify the supporting elements before generating the data base that defines the three-dimensional geometry representing the union of the objects with the supports.

It is also the object of the present invention to provide a method that allows the operator to easily modify each supporting element independently of the other ones.

Said objects are achieved by a method according to claim 1.

Further characteristics and details of the method that is the subject of the invention are described in the related dependent claims.

Said objects are also achieved by a system according to claim 10 as well as by a computer program product according to claim 11.

Advantageously, the possibility to easily modify the supporting elements once they have been defined and before the generation of the second data base allows the operator to design the same supporting elements more rapidly.

Still advantageously, the operator can easily optimize the geometry of the supporting elements, in such a way as to limit the time that is necessary to produce the three-dimensional object through stereolithography and the material used in said process.

Said objects and advantages, together with others that are highlighted here below, will be clear from the description of a preferred embodiment of the invention that is provided by way of non-limiting example with reference to the attached drawings, wherein:
- Figure 1 schematically shows the method of the invention;
- Figure 2 schematically shows the structure of the data used in the method of the invention;
- Figure 3 shows a three-dimensional object;
- Figure 4 shows a three-dimensional object obtained by joining the three-dimensional object shown in Figure 3 to a plurality of supporting elements;
- Figure 5 shows an enlarged detail of the three-dimensional object shown in Figure 4;
- Figure 6 schematically shows the three-dimensional object of Figure 4 subdivided into layers.

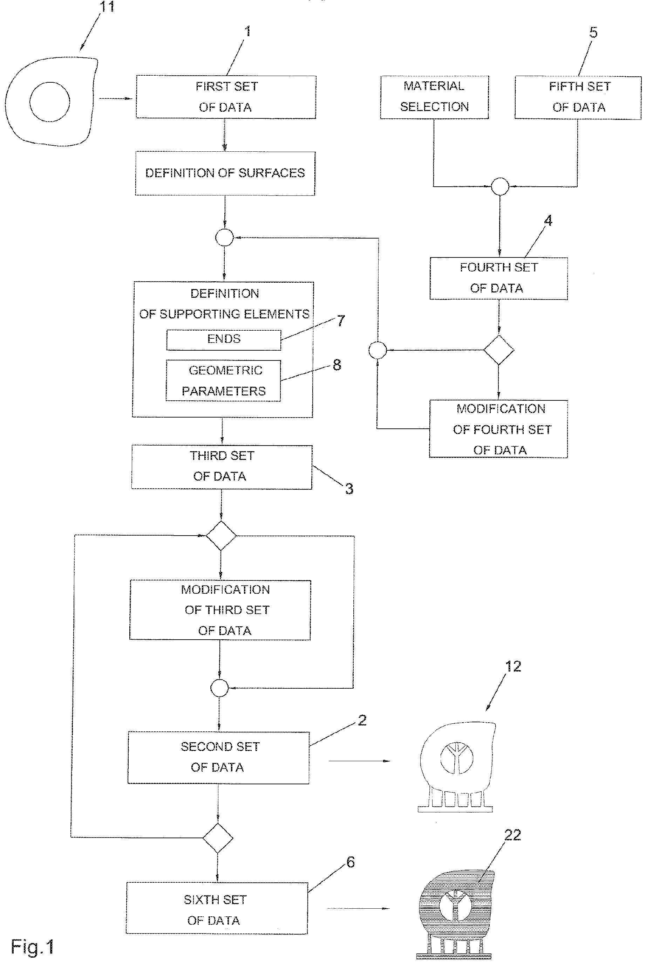

The method that is the subject of the invention, intended to generate a numerical representation of a three-dimensional object **11** to be produced through stereolithography, is schematically represented in Figure 1 and comprises the operations described below.

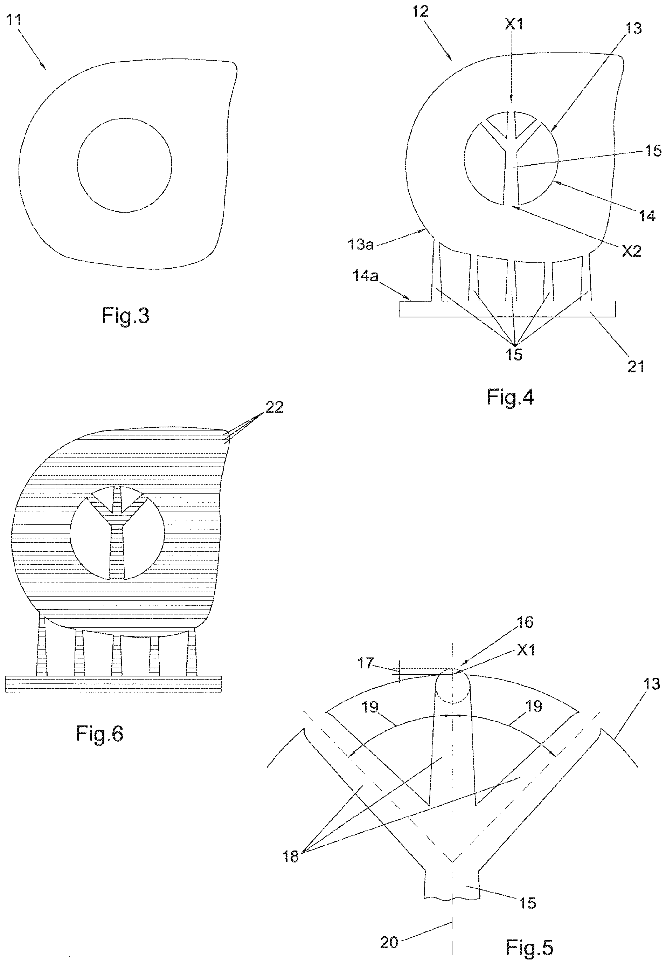

First of all, the method includes the operation of preparing a first set of data **1** representative of the geometry of the three-dimensional object **11** to be made, a merely indicative example of which is shown in Figure 3.

Successively, one or more first surfaces **13, 13a** of the three-dimensional object **11** are defined, which need to be supported and are indicated in Figure 4 by way of example.

Obviously, the first surfaces **13, 13a** can be defined both by means of a mathematical algorithm and through manual selection performed by the operator.

Analogously, reference surfaces **14, 14a** are defined that face said first surfaces **13, 13a** and are suited to support them.

The reference surfaces **14, 14a** can be defined as a corresponding number of surfaces of the three-dimensional object **11,** or as surfaces that are separate from the three-dimensional object **11** itself.

The first option is preferably adopted for a first surface **13** that belongs to a cavity created inside the three-dimensional object **11.**

In this case, the corresponding reference surface **14** is the opposite surface belonging to the same cavity.

The second option is preferably adopted when the first surface **13a** is external to the three-dimensional object **11.**

In this second case, the corresponding reference surface **14a** is defined so that it is positioned at a certain distance from the initial three-dimensional object **11.** In this case, said reference surface **14a** preferably belongs to a supporting base **21** that is generated outside the three-dimensional object **11.**

Said supporting base **21,** indicated in Figure 4, serves for resting the object on the modelling platform of the stereolithography machine during production of the three-dimensional object itself, with the aim to improve the adhesion of the latter to the platform itself.

The method furthermore includes the operation of defining a plurality of supporting elements **15** that connect the first surfaces **13, 13a** to the corresponding reference surfaces **14, 14a,** illustrated by way of example in Figure 4.

The method furthermore includes the operation of calculating a second set of data **2** representative of a modified three-dimensional object **12** resulting from the union of the three-dimensional object **11** with the plurality of supporting elements **15** as defined above and with the supporting base **21,** if any. According to the invention, the supporting elements **15** are defined through corresponding geometric parameters.

More precisely, for each supporting element **15** the following are defined: a first point **X1** on the corresponding first surface **13, 13a,** a second point **X2** on the corresponding reference surface **14, 14a** and **n** geometric parameters **P1...Pn** suited to completely define the three-dimensional geometry of the supporting element **15** itself based on a conventional description of the supporting elements.

Clearly, **n** can vary from one to any number, based on the number of degrees of freedom that are going to be used to describe the supporting elements **15.** An example of usable geometric parameters is provided further on.

It can be understood that each supporting element **15** is completely defined by the coordinates **7** of the terminal points **X1** and **X2** and by the geometric parameters **P1...Pn** that define its three-dimensional development.

In particular, the definition of the supporting elements **15** comprises the generation of a third set of data **3** containing said coordinates **7,** as well as the values **8** of the geometric parameters **P1...Pn** for each supporting element **15.** Said third set of data **3** is used to generate the numerical representation of each supporting element **15,** which is then used in the calculation of the second set of data **2.**

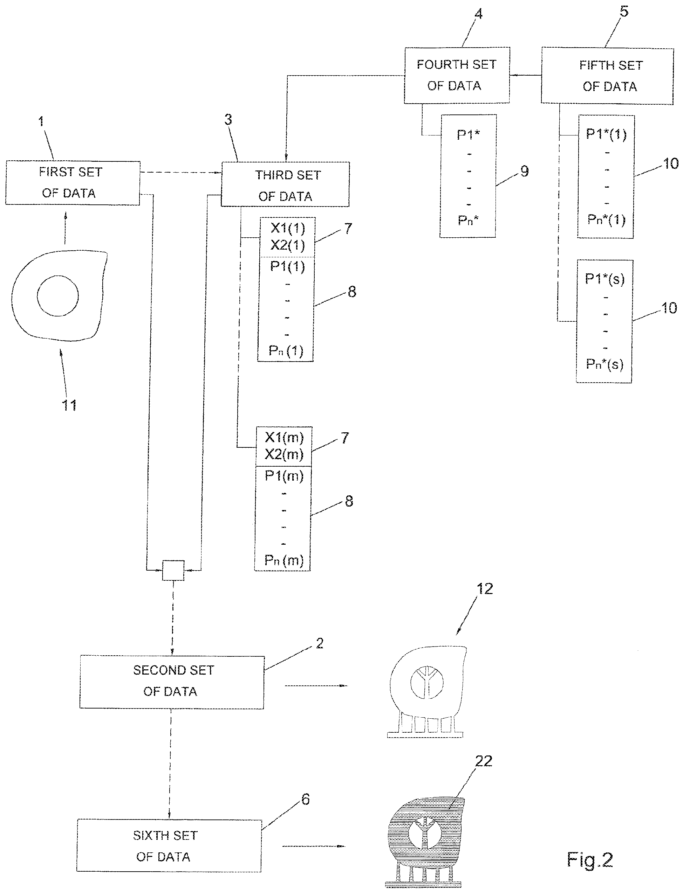

The structure of the data as described above is schematically represented in Figure 2, where the coordinates of the points **X1** and **X2** and the geometric parameters **P1...Pn** corresponding to each supporting element **15** have been conventionally identified through indices from 1 to **m** in parentheses, where **m** is the number of supporting elements **15.**

In other words, the coordinates of the terminal points and the geometric parameters of the i-th supporting element are conventionally indicated by **X1(i), X2(i)** and **P1(i)...Pn(i).**

It can be understood that said data structure makes it possible to modify any i-th supporting element **15** by modifying the related geometric parameters **P1(i)...Pn(i).**

This makes it possible to modify the geometry of the supporting elements **15** in a simple, rapid and interactive manner, even after they have been defined and before the calculation of the second set of data **2.**

Furthermore, the fact that each supporting element **15** is defined through specific geometric parameters allows the supporting element to be modified independently of the other supporting elements **15,** thus achieving another object of the invention.

Therefore, the method preferably comprises the operation of modifying the third set of data **3** so as to modify the values **8** of one or more geometric parameters **P1...Pn** corresponding to at least one of the supporting elements **15.**

Successively, the numerical representation of the modified supporting element **15** is re-generated and then the second set of data **2** is updated. Advantageously, said update does not require the complete re-calculation of the second set of data **2,** making it possible to limit the re-generation only to the modified supporting element **15.**

Preferably, the definition of the supporting elements **15** includes the generation of a fourth set of data **4** containing a reference value **9** for each geometric parameter **P1...Pn.** The geometric parameters corresponding to said reference values **9** are indicated by **P1*...Pn*** in Figure 2, in order to differentiate them from the geometric parameters of each supporting element **15.**

Said reference values **9** are used in the generation of the third set of data **3,** assigning to each geometric parameter **P1...Pn** corresponding to each supporting element **15** the corresponding reference value **9** of the fourth set of data **4.**

Said fourth set of data **4** advantageously makes it possible to initially assign the same reference values **9** to the parameters **P1...Pn** of all the supporting elements **15.**

Clearly, the reference values **9** can be defined based on the geometry of the three-dimensional object **11,** on the material that is going to be used to make it, on the thickness of each layer into which the three-dimensional object is going to be subdivided for production, etc.

Preferably, the method includes also the operation of modifying the fourth set of data **4** in such a way as to modify the reference value **9** corresponding to one or more geometric parameters **P1*...Pn*.**

The reference values **9** modified in this way can be assigned to the corresponding geometric parameters **P1...Pn** of two or more supporting elements **15,** preferably of all the supporting elements **15,** through the corresponding modification of the third set of data **3.**

Successively, the calculation of the second set of data **2** will be repeated based on the third set of data **3** modified as indicated above.

It can be understood that the possibility to modify the fourth set of data **4** advantageously makes it possible to modify two or more supporting elements **15** with a single operation.

Preferably, the method includes also the definition of a fifth set of data **5** containing a set of predefined reference values **10** of the geometric parameters **P1...Pn** for each material of a plurality of materials suited to be used to make a generic three-dimensional object through stereolithography and identified in advance.

In Figure 2, the geometric parameters of each set have been indicated with an asterisk and with an index from 1 to **s** in parentheses, where **s** is the number of different materials.

In other words, the set of geometric parameters related to the j-th material is indicated by **P1*(j)...Pn*(j).**

Preferably, the generation of the fourth set of data **4** includes the operation of selecting one of said materials and assigning to the reference values **9** of the fourth set of data **4** the corresponding predefined reference values **10** corresponding to the material itself and contained in the fifth set of data **5.** Advantageously, the fifth set of data 5 described above makes it possible to simply and rapidly assign the reference values **9** to the geometric parameters **P1...Pn** of the supporting elements **15,** based on the type of material with which the three-dimensional object **11** is going to be made.

Preferably, said first, second and third set of data **1, 2** and **3** are stored in a memory support of a computer.

Preferably, also the sets of data **4** and **5** are stored in the same memory support.

As regards the geometric parameters **P1...Pn,** they preferably comprise one or more of the following parameters:
- transverse dimension of the generic supporting element **15;**
- ratio between the transverse dimension of the supporting element **15** and the length of the supporting element **15;**
- size of a sphere **16** that defines at least one end of the supporting element **15,** as indicated in Figure 5;
- interpenetration depth **17** of said sphere **16** in the corresponding first surface **13, 13a** or in the corresponding reference surface **14, 14a** of the supporting element **15;**
- maximum number of branches **18** at the level of at least one end of the supporting element **15;**
- maximum inclination **19** of said branches **18** with respect to the direction of development **20** of the supporting element **15.**

Clearly, further geometric parameters representative of a corresponding number of geometric aspects of the supporting elements **15** can be added to said list.

Preferably, the second set of data **2** obtained with the method described above is used in a process for making the three-dimensional object **11** through stereolithography.

According to this process, a sixth set of data **6** is calculated that is representative of a plurality of bidimensional and mutually parallel cross sections **22** of the three-dimensional object described by the second set of data **2,** as shown in Figure 6 merely by way of example.

Therefore, the sixth set of data **6** includes, in addition to the three-dimensional object **11,** also the supporting elements **15** and the supporting base **21,** if any. Said sixth set of data **6** is then used in a stereolithography machine to obtain a plurality of solid layers corresponding to said plurality of bidimensional cross sections **22.**

As already mentioned, the invention concerns also a piece of equipment for the generation of said numerical representation of the three-dimensional object **11.**

Said equipment comprises a computer, not illustrated herein but known per se, provided with a processing unit and a memory support that can be accessed by the processing unit.

The equipment comprises also means for acquiring the first set of data **1** representative of the geometry of the three-dimensional object **11** and for loading it in the memory support.

The equipment comprises also means for defining the first surfaces **13, 13a** and the reference surfaces **14, 14a** and means for defining the supporting elements **15.**

In particular, the means for defining the supporting elements **15** comprise means for defining the first point **X1,** the second point **X2** and the geometric parameters **P1...Pn** of each supporting element **15** and means for generating the third set of data **3** and loading it in the memory support.

The equipment comprises also means for modifying the third set of data **3** as described above and means for calculating the second set of data **2** in the way described above and for loading it in the memory support.

In particular, the means for calculating the second set of data **2** comprise means for generating a numerical representation of each supporting element **15** based on said third set of data **3.**

As already mentioned, the present invention concerns also a computer program product comprising a data support provided with program portions configured in such a way that, when executed on said computer, they configure it for the implementation of the method of the invention described above.

In particular, said program portions, when executed on the computer, define means for acquiring the first set of data **1** and loading it in the memory support, means for defining the first surfaces **13, 13a,** the reference surfaces **14, 14a** and the supporting elements **15** that connect them as described above, as well as means for calculating the second set of data **2** as described above and for loading it in the memory support.

In practice, the operator acquires the first set of data **1** representative of the three-dimensional object **11.**

The first set of data **1** can be supplied in any format of the known type like, for example, DWG, STEP, IGES, PRT, STL or any other format, provided that it is suitable for the numerical representation of a three-dimensional geometry. The first set of data **1** can be generated, for example, by a three-dimensional modelling program or by a three-dimensional optical reader or by any other device capable of generating a numerical representation of the three-dimensional object **11.**

The operator stores the first set of data **1** in a piece of equipment of the type described above and starts the execution of the program loaded therein, which defines the supporting elements **15** and generates the corresponding third set of data **3.**

If necessary, before starting said program, the operator can set the fourth set of data **4** containing the reference values **9** for the geometric parameters **P1*...Pn*.**

The equipment then makes said data available to the operator, preferably translated in a graphic format.

The operator can then modify the geometric parameters **P1...Pn** of one or more supporting elements **15,** modifying the third set of data **3,** or modify a plurality of supporting elements **15** intervening on the reference values **9** contained in the fourth set of data **4.**

Successively, the program generates the second set of data **2** representative of the three-dimensional object **11** with the supporting elements **15** modified as required by the user and with the supporting base **21,** if any.

According to the above, it can be understood that the method and the equipment for the generation of the numerical representation and the computer program product described above achieve all of the set objects.

In particular, the definition of the supporting elements based on the terminal points and on geometric parameters that describe their three-dimensional configuration, as well as the organization of the terminal points and the geometric parameters in a third set of data, allow the shape of the supporting elements to be easily modified after their definition.

Furthermore, as the third set of data comprises geometric parameters of each supporting element that are independent of the geometric parameters of the remaining supporting elements, it is possible to easily modify each supporting element independently of the other ones.

## Claims

1. Method performed by a computer and by a stereolithography machine, the method for making a three-dimensional object (11), comprising:
by the computer:
- preparing a first set of data (1) representative of the geometry of said three-dimensional object (11);
- defining one or more first surfaces (13, 13a) of said three-dimensional object (11) and one or more reference surfaces (14, 14a) facing each one of said first surfaces (13, 13a);
- defining a plurality of supporting elements (15) connecting said first surfaces (13, 13a) to said one or more corresponding reference surfaces (14, 14a);
- calculating a second set of data (2) in such a way that it is representative of the geometry resulting from the union of said three-dimensional object (11) with said plurality of supporting elements (15); an operation of defining said plurality of supporting elements (15) comprising, for each one of said supporting elements (15), an operation of defining a corresponding first point (X1) belonging to said supporting element (15) on the corresponding first surface (13, 13a) and a corresponding second point (X2) belonging to said supporting element (15) on the corresponding reference surface (14, 14a); said operation of defining said plurality of supporting elements (15) comprises the following operations:
- for each one of said supporting elements (15), defining one or more corresponding geometric parameters (P1...Pn) suited to completely define, in combination with the corresponding said first point (X1) and said second point (X2), a three-dimensional configuration of said supporting elements (15),
- generating a third set of data (3) containing coordinates (7) of said first point (X1) and of said second point (X2) and values (8) of said geometric parameters (P1... Pn) of each one and all of said supporting elements (15);
- rendering said third set of data (3) available to an operator for modification before performing an operation of said calculating said second set of data (2), said modification comprising modifying the values (8) of one or more geometric parameters (P1...Pn) corresponding to at least one supporting element (15) of said plurality of supporting elements (15), independently of the geometric parameters (P1...Pn) corresponding to the other supporting elements (15);
said operation of calculating said second set of data (2) comprising the generation of a numerical representation for each supporting element (15) based on said modified third set of data (3) and generation of a numerical representation of the geometry of said three-dimensional object (11) based on the first set of data (1),
said method further comprises:
- calculating a sixth set of data (6) representative of a plurality of bidimensional and mutually parallel cross sections (22) of the three-dimensional object represented by said second set of data (2);
- using said sixth set of data (6) in a stereolithography machine in such a way as to obtain a plurality of solid layers respectively corresponding to said plurality of bidimensional and mutually parallel cross sections (22), wherein the three-dimensional object (11) is made through a sequential superimposition of said plurality of solid layers.

2. Method according to claim 1, **characterized in that**:
- said operation of defining said plurality of supporting elements (15) includes the generation of a fourth set of data (4) containing a reference value (9) for each one of said geometric parameters (P1...Pn);
- said generation of said third set of data (3) comprising the assignment of said reference values (9) to the corresponding geometric parameters (P1...Pn) of each supporting element (15).

3. Method according to claim 2, **characterized in that** said operation of defining said plurality of supporting elements (15) comprises the following operations:
- modifying said fourth set of data (4) so as to modify the reference value (9) corresponding to at least one of said geometric parameters (P1...Pn);
- modifying said third set of data (3) so as to assign said modified reference value (9) to said at least one of said geometric parameters (P1...Pn) of at least two of said supporting elements (15).

4. Method according to claim 2 or 3, **characterized in that** it comprises the following operations:
- identifying a plurality of materials suited to be used to produce said three-dimensional object (11) through stereolithography;
- defining a fifth set of data (5) containing, for each one of said materials, a corresponding set of predefined reference values (10) for said geometric parameters (P1...Pn);
said generation of said fourth set of data (4) including the selection of a material belonging to said plurality of materials, and the assignment of the predefined reference values (10) corresponding to said material to said fourth set of data (4).

5. Method according to any of the preceding claims, **characterized in that** it includes the operation of storing said first set of data (1), second set of data (2) and third set of data (3) in a memory support of a computer.

6. Method according to any of the preceding claims, **characterized in that** said geometric parameters (P1...Pn) comprise one or more of the following parameters:
- transverse dimension of a supporting element (15);
- ratio between the transverse dimension of a supporting element (15) and the length of the supporting element (15);
- size of a sphere (16) defining at least one of the ends of a supporting element (15);
- interpenetration depth (17) of said sphere (16) in the corresponding first surface (13, 13a) or in the corresponding reference surface (14, 14a);
- maximum number of branches (18) of a supporting element (15) at the level of at least one of said ends;
- maximum inclination (19) of said branches (18) with respect to the direction of development (20) of the supporting element (15).

7. Method according to any of the preceding claims, **characterized in that** at least one of said reference surfaces (14) is a surface of said three-dimensional object (11).

8. Method according to any of the preceding claims, **characterized in that** at least one of said reference surfaces (14a) is a surface that is separate from said three-dimensional object (11).

9. Method according to claim 8, **characterized in that** said calculation of said second set of data (2) comprises the following operations:
- defining a supporting base (21) comprising said at least one reference surface (14, 14a);
- calculating said second set of data (2) in such a way that it is representative of the geometry resulting from the union of said three-dimensional object (11) with said plurality of supporting elements (15) and with said supporting base (21).

10. System for making a three-dimensional object (11), the system comprising an equipment for generating a numerical representation of a three- dimensional object (11) to be made through stereolithography, the equipment comprising:
- a computer comprising a processing unit and a memory support accessible by said processing unit;
- means for acquiring a first set of data (1) representative of the geometry of said three-dimensional object (11) and for loading said first set of data in said memory support;
- means for defining one or more first surfaces (13, 13a) of said three-dimensional object (11) and one or more reference surfaces (14, 14a) facing each one of said first surfaces (13, 13a);
- means for defining a plurality of supporting elements (15) connecting each one of said first surfaces (13, 13a) to said one or more corresponding reference surfaces (14, 14a);
- means for calculating a second set of data (2) in such a way that it is representative of the geometry resulting from the union of said three-dimensional object (11) with said plurality of supporting elements (15) and for loading said second set of data in said memory support;
wherein said means for defining said plurality of supporting elements (15) comprise means for defining, for each one of said supporting elements (15), a corresponding first point (X1) of said supporting element (15) on the corresponding first surface (13, 13a) and a corresponding second point (X2) of said supporting element (15) on the corresponding reference surface (14, 14a); wherein said means for defining said plurality of supporting elements (15) comprise:
- means for defining, for each one of said supporting elements (15), one or more corresponding geometric parameters (P1...Pn) suited to completely define, in combination with the corresponding said first point (X1) and said second point (X2), a three-dimensional configuration of said supporting elements (15);
- means for generating a third set of data (3) containing coordinates of said first point (X1) and of said second point (X2) and values (8) of said geometric parameters (P1...Pn) of each one and all of said supporting elements (15), and for loading said third set of data in said memory support;
- means for rendering said third set of data (3) available to an operator for modification before said calculating said second set of data (2);
- said modification comprises means for allowing an operator to modify said third set of data (3) so as to modify the values (8) of one or more geometric parameters (P1...Pn) corresponding to at least one supporting element (15) of said plurality of supporting elements (15) independently of the geometric parameters (P1...Pn) corresponding to the other supporting elements (15);
said means for calculating said second set of data (2) comprising means for generating a numerical representation of each supporting element (15) based on said modified third set of data (3) and generation of a numerical representation of the geometry of said three-dimensional object (11) based on the first set of data (1),
the equipment further comprises means for calculating a sixth set of data (6) representative of a plurality of bidimensional and mutually parallel cross sections (22) of the three-dimensional object represented by said second set of data (2);
the system further comprises a stereolithography machine for using said sixth set of data (6) in in such a way as to obtain a plurality of solid layers respectively corresponding to said plurality of bidimensional and mutually parallel cross sections (22), wherein the
three-dimensional object (11) is made through a sequential superimposition of said plurality of solid layers.

11. Computer program product comprising a data support provided with program portions configured in such a way that, when executed on a computer and a stereolithography machine, cause said computer and said stereolithography machine to implement respectively, the steps of the method according to any one of claims 1 to 9.

## Patentansprüche

1. Verfahren, durchgeführt durch einen Computer und durch eine Stereolithographie-Maschine, wobei das Verfahren eines zur Herstellung eines dreidimensionalen Objekts (11) ist, umfassend:
- Vorbereiten eines ersten Datensatzes (1), welcher für die Geometrie des dreidimensionalen Objekts (11) repräsentativ ist;
- Definieren einer oder mehrerer erster Flächen (13, 13a) des dreidimensionalen Objekts (11) und einer oder mehrerer Referenzflächen (14, 14a), welche einer jeweiligen der ersten Flächen (13, 13a) zugewandt sind;
- Definieren mehrerer Unterstützungselemente (15), welche die ersten Flächen (13, 13a) mit der einen oder den mehreren entsprechenden Referenzflächen (14, 14a) verbinden;
- Berechnen eines zweiten Datensatzes (2) derart, dass er für die Geometrie repräsentativ ist, die aus der Verbindung des dreidimensionalen Objekts (11) mit den mehreren Unterstützungselementen (15) resultiert;
wobei eine Operation des Definierens der mehreren Unterstützungselemente (15) für jedes der Unterstützungselemente (15) eine Operation des Definierens eines entsprechenden ersten Punktes (X1), der zu dem Unterstützungselement (15) gehört, auf der entsprechenden ersten Fläche (13, 13a) und eine Operation des Definierens eines entsprechenden zweiten Punktes (X2), der zu dem Unterstützungselement (15) gehört, auf der entsprechenden Referenzfläche (14, 14a) umfasst;
wobei die Operation des Definierens der mehreren Unterstützungselemente (15) die folgenden Operationen umfasst:
- für jedes der Unterstützungselemente (15) Definieren eines oder mehrerer entsprechender geometrischer Parameter (P1 ... Pn), die dafür geeignet sind, in Kombination mit dem entsprechenden ersten Punkt (X1) und dem zweiten Punkt (X2) vollständig eine dreidimensionale Konfiguration der Unterstützungselemente (15) zu definieren;
- Erzeugen eines dritten Datensatzes (3), welcher Koordinaten (7) des ersten Punktes (X1) und des zweiten Punktes (X2) und Werte (8) der geometrischen Parameter (P1 ... Pn) jedes und aller der Unterstützungselemente (15) enthält;
- Verfügbarmachen des dritten Datensatzes (3) für einen Operator zur Modifikation vor dem Durchführen einer Operation des Berechnens des zweiten Datensatzes (2), wobei die Modifikation Modifizieren der Werte (8) eines oder mehrerer geometrischer Parameter (P1 ... Pn), die mindestens einem Unterstützungselement (15) der mehreren Unterstützungselemente (15) entsprechen, unabhängig von den geometrischen Parametern (P1 ... Pn) umfasst, die den anderen Unterstützungselementen (15) entsprechen;
wobei die Operation des Berechnens des zweiten Datensatzes (2) die Erzeugung einer numerischen Repräsentation für jedes Unterstützungselement (15) auf Grundlage des modifizierten dritten Datensatzes (3) und die Erzeugung einer numerischen Repräsentation der Geometrie des dreidimensionalen Objekts (11) auf Grundlage des ersten Datensatzes (1) umfasst, wobei das Verfahren ferner umfasst:
- Berechnen eines sechsten Datensatzes (6), welcher für mehrere zweidimensionale und zueinander parallele Querschnitte (22) des dreidimensionalen Objekts repräsentativ ist, das durch den zweiten Datensatz (2) repräsentiert wird;
- Verwenden des sechsten Datensatzes (6) in einer Stereolithographie-Maschine derart, dass mehrere feste Schichten erhalten werden, welche jeweils den mehreren zweidimensionalen und zueinander parallelen Querschnitten (22) entsprechen, wobei das dreidimensionale Objekt (11) durch eine sequenzielle Überlagerung der mehreren festen Schichten hergestellt wird.

2. Verfahren nach Anspruch 1, **dadurch gekennzeichnet, dass**:
- die Operation des Definierens der mehreren Unterstützungselemente (15) die Erzeugung eines vierten Datensatzes (4) umfasst, welcher einen Referenzwert (9) für jeden der geometrischen Parameter (P1 ... Pn) enthält;
- die Erzeugung des dritten Datensatzes (3) die Zuweisung der Referenzwerte (9) zu den entsprechenden geometrischen Parametern (P1 ... Pn) jedes Unterstützungselements (15) umfasst.

3. Verfahren nach Anspruch 2, **dadurch gekennzeichnet, dass** die Operation des Definierens der mehreren Unterstützungselemente (15) die folgenden Operationen umfasst:
- Modifizieren des vierten Datensatzes (4) derart, dass der Referenzwert (9) modifiziert wird, der mindestens einem der geometrischen Parametern (P1 ... Pn) entspricht;
- Modifizieren des dritten Datensatzes (3) derart, dass dem mindestens einen der geometrischen Parameter (P1 ... Pn) von mindestens zweien der Unterstützungselemente (15) der modifizierte Referenzwert (9) zugewiesen wird.

4. Verfahren nach Anspruch 2 oder 3, **dadurch gekennzeichnet, dass** es die folgenden Operationen umfasst:
- Identifizieren mehrerer Materialien, welche für eine Verwendung zur Herstellung des dreidimensionalen Objekts (11) durch Stereolithographie geeignet sind;
- Definieren eines fünften Datensatzes (5), welcher für jedes der Materialien einen entsprechenden Satz vorab definierter Referenzwerte (10) für die geometrischen Parameter (P1 ... Pn) enthält;
wobei die Erzeugung des vierten Datensatzes (4) die Auswahl eines Materials, welches zu den mehreren Materialien gehört, und die Zuweisung der vorab definierten Referenzwerte (10), die dem Material entsprechen, zu dem vierten Datensatz (4) umfasst.

5. Verfahren nach einem der vorhergehenden Ansprüche, **dadurch gekennzeichnet, dass** es die Operation des Speicherns des ersten Datensatzes (1), des zweiten Datensatzes (2) und des dritten Datensatzes (3) in einer Speicherunterstützung eines Computers umfasst.

6. Verfahren nach einem der vorhergehenden Ansprüche, **dadurch gekennzeichnet, dass** die geometrischen Parameter (P1 ... Pn) einen oder mehrere der folgenden Parameter umfassen:
- Querabmessung eines Unterstützungselements (15);
- Verhältnis zwischen der Querabmessung eines Unterstützungselements (15) und der Länge des Unterstützungselements (15);
- Größe einer Kugel (16), welche mindestens eines der Enden eines Unterstützungselements (15) definiert;
- Eindringtiefe (17) der Kugel (16) in die entsprechende erste Fläche (13, 13a) oder in die entsprechende Referenzfläche (14, 14a);
- maximale Anzahl an Zweigen (18) eines Unterstützungselements (15) auf der Höhe mindestens eines der Enden;
- maximale Neigung (19) der Zweige (18) in Bezug auf die Entwicklungsrichtung (20) des Unterstützungselements (15).

7. Verfahren nach einem der vorhergehenden Ansprüche, **dadurch gekennzeichnet, dass** mindestens eine der Referenzflächen (14) eine Fläche des dreidimensionalen Objekts (11) ist.

8. Verfahren nach einem der vorhergehenden Ansprüche, **dadurch gekennzeichnet, dass** mindestens eine der Referenzflächen (14a) eine Fläche ist, die von dem dreidimensionalen Objekt (11) getrennt ist.

9. Verfahren nach Anspruch 8, **dadurch gekennzeichnet, dass** die Berechnung des zweiten Datensatzes (2) die folgenden Operationen umfasst:
- Definieren einer Unterstützungsbasis (21), welche die mindestens eine Referenzfläche (14, 14a) umfasst;
- Berechnen des zweiten Datensatzes (2) derart, dass er für die Geometrie repräsentativ ist, die aus der Verbindung des dreidimensionalen Objekts (11) mit den mehreren Unterstützungselementen (15) und mit der Unterstützungsbasis (21) resultiert.

10. System zum Herstellen eines dreidimensionalen Objekts (11), wobei das System eine Anlage zum Erzeugen einer numerischen Repräsentation eines dreidimensionalen Objekts (11) umfasst, welches durch Stereolithographie herzustellen ist, wobei die Anlage umfasst:
- einen Computer, welcher eine Verarbeitungseinheit und eine Speicherunterstützung umfasst, auf welche die Verarbeitungseinheit in der Lage ist, zuzugreifen;
- Mittel zum Erwerben eines ersten Datensatzes (1), welcher für die Geometrie des dreidimensionalen Objekts (11) repräsentativ ist, und zum Laden des ersten Datensatzes in die Speicherunterstützung;
- Mittel zum Definieren einer oder mehrerer erster Flächen (13, 13a) des dreidimensionalen Objekts (11) und einer oder mehrerer Referenzflächen (14, 14a), welche einer jeweiligen der ersten Flächen (13, 13a) zugewandt sind;
- Mittel zum Definieren mehrerer Unterstützungselemente (15), welche eine jeweilige der ersten Flächen (13, 13a) mit der einen oder den mehreren entsprechenden Referenzflächen (14, 14a) verbinden;
- Mittel zum Berechnen eines zweiten Datensatzes (2) derart, dass er für die Geometrie repräsentativ ist, die aus der Verbindung des dreidimensionalen Objekts (11) mit den mehreren Unterstützungselementen (15) resultiert, und zum Laden des zweiten Datensatzes in die Speicherunterstützung;
wobei die Mittel zum Definieren der mehreren Unterstützungselemente (15) für jedes der Unterstützungselemente (15) Mittel zum Definieren eines entsprechenden ersten Punktes (X1) des Unterstützungselements (15) auf der entsprechenden ersten Fläche (13, 13a) und eines entsprechenden zweiten Punktes (X2) des Unterstützungselements (15) auf der entsprechenden Referenzfläche (14, 14a) umfassen;
wobei die Mittel zum Definieren der mehreren Unterstützungselemente (15) umfassen:
- für jedes der Unterstützungselemente (15) Mittel zum Definieren eines oder mehrerer entsprechender geometrischer Parameter (P1 ... Pn), die dafür geeignet sind, in Kombination mit dem entsprechenden ersten Punkt (X1) und dem zweiten Punkt (X2) vollständig eine dreidimensionale Konfiguration der Unterstützungselemente (15) zu definieren;
- Mittel zum Erzeugen eines dritten Datensatzes (3), welcher Koordinaten (7) des ersten Punktes (X1) und des zweiten Punktes (X2) und Werte (8) der geometrischen Parameter (P1 ... Pn) jedes und aller der Unterstützungselemente (15) enthält, und zum Laden des dritten Datensatzes in die Speicherunterstützung;
- Mittel zum Verfügbarmachen des dritten Datensatzes (3) für einen Operator zur Modifikation vor dem Berechnen des zweiten Datensatzes (2);
wobei die Modifikation Mittel zum Ermöglichen umfasst, dass ein Operator den dritten Datensatz (3) derart modifiziert, dass er die Werte (8) eines oder mehrerer geometrischer Parameter (P1 ... Pn), die mindestens einem Unterstützungselement (15) der mehreren Unterstützungselemente (15) entsprechen, unabhängig von den geometrischen Parametern (P1 ... Pn) modifiziert, die den anderen Unterstützungselementen (15) entsprechen;
wobei die Mittel zum Berechnen des zweiten Datensatzes (2) Mittel zum Erzeugen einer numerischen Repräsentation jedes Unterstützungselements (15) auf Grundlage des modifizierten dritten Datensatzes (3) und zum Erzeugen einer numerischen Repräsentation der Geometrie des dreidimensionalen Objekts (11) auf Grundlage des ersten Datensatzes (1) umfassen, wobei die Anlage ferner Mittel zum Berechnen eines sechsten Datensatzes (6), welcher für mehrere zweidimensionale und zueinander parallele Querschnitte (22) des dreidimensionalen Objekts repräsentativ ist, das durch den zweiten Datensatz (2) repräsentiert wird;
wobei das System ferner eine Stereolithographie-Maschine zum Verwenden des sechsten Datensatzes (6) derart umfasst, dass mehrere feste Schichten erhalten werden, welche jeweils den mehreren zweidimensionalen und zueinander parallelen Querschnitten (22) entsprechen, wobei das dreidimensionale Objekt (11) durch eine sequenzielle Überlagerung der mehreren festen Schichten hergestellt wird.

11. Computerprogrammprodukt, welches eine Datenunterstützung umfasst, die mit Programmabschnitten bereitgestellt wird, die so konfiguriert sind, dass, wenn sie auf einem Computer und einer Stereolithographie-Maschine ausgeführt werden, bewirken, dass der Computer und die Stereolithographie-Maschine jeweils die Schritte des Verfahrens nach einem der Ansprüche 1 bis 9 realisieren.

## Revendications

1. Méthode réalisée par un ordinateur et par une machine de stéréolithographie, la méthode étant destinée à fabriquer un objet tridimensionnel (11), comprenant :
par l'ordinateur :
- la préparation d'un premier jeu de données (1) représentatif de la géométrie dudit objet tridimensionnel (11) ;
- la définition d'une ou plusieurs premières surfaces (13, 13a) dudit objet tridimensionnel (11) et d'une ou plusieurs surfaces de référence (14, 14a) faisant face à chacune desdites premières surfaces (13, 13a) ;
- la définition d'une pluralité d'éléments de support (15) reliant lesdites premières surfaces (13, 13a) auxdites une ou plusieurs surfaces de référence (14, 14a) correspondantes ;
- le calcul d'un deuxième jeu de données (2) de façon à ce qu'il soit représentatif de la géométrie résultant de l'union dudit objet tridimensionnel (11) et de ladite pluralité d'éléments de support (15) ;
une opération de définition de ladite pluralité d'éléments de support (15) comprenant, pour chacun desdits éléments de support (15), une opération de définition d'un premier point (X1) correspondant appartenant audit élément de support (15) sur la première surface (13, 13a) correspondante et d'un deuxième point (X2) correspondant appartenant audit élément de support (15) sur la surface de référence (14, 14a) correspondante ;
ladite opération de définition de ladite pluralité d'éléments de support (15) comprend les opérations suivantes :
- pour chacun desdits éléments de support (15), la définition d'un ou plusieurs paramètres géométriques (P1... Pn) correspondants appropriés pour définir complètement, en association avec ledit premier point (X1) correspondant et ledit deuxième point (X2), une configuration tridimensionnelle desdits éléments de support (15),
- la génération d'un troisième jeu de données (3) contenant des coordonnées (7) dudit premier point (X1) et dudit deuxième point (X2) et des valeurs (8) desdits paramètres géométriques (P1... Pn) de chacun et de la totalité desdits éléments de support (15) ;
- le fait de mettre ledit troisième jeu de données (3) à la disposition d'un opérateur pour une modification avant la réalisation d'une opération dudit calcul dudit deuxième jeu de données (2), ladite modification comprenant la modification des valeurs (8) d'un ou plusieurs paramètres géométriques (P1... Pn) correspondant à au moins un élément de support (15) de ladite pluralité d'éléments de support (15), indépendamment des paramètres géométriques (P1... Pn) correspondant aux autres éléments de support (15) ;
ladite opération de calcul dudit deuxième jeu de données (2) comprenant la génération d'une représentation numérique pour chaque élément de support (15) sur la base dudit troisième jeu de données (3) modifié et de la génération d'une représentation numérique de la géométrie dudit objet tridimensionnel (11) sur la base du premier jeu de données (1),
ladite méthode comprenant en outre :
- le calcul d'un sixième jeu de données (6) représentatif d'une pluralité de coupes transversales bidimensionnelles et mutuellement parallèles (22) de l'objet tridimensionnel représenté par ledit deuxième jeu de données (2) ;
- l'utilisation dudit sixième jeu de données (6) dans une machine de stéréolithographie de façon à obtenir une pluralité de couches solides correspondant respectivement à ladite pluralité de coupes transversales bidimensionnelles et mutuellement parallèles (22), dans laquelle l'objet tridimensionnel (11) est fabriqué par le biais d'une superposition séquentielle de ladite pluralité de couches solides.

2. Méthode selon la revendication 1, **caractérisée en ce que** :
- ladite opération de définition de ladite pluralité d'éléments de support (15) comporte la génération d'un quatrième jeu de données (4) contenant une valeur de référence (9) pour chacun desdits paramètres géométriques (P1... Pn) ;
- ladite génération dudit troisième jeu de données (3) comprenant l'assignation desdites valeurs de référence (9) aux paramètres géométriques (P1... Pn) correspondants de chaque élément de support (15).

3. Méthode selon la revendication 2, **caractérisée en ce que** ladite opération de définition de ladite pluralité d'éléments de support (15) comprend les opérations suivantes :
- la modification dudit quatrième jeu de données (4) de manière à modifier la valeur de référence (9) correspondant à au moins un parmi lesdits paramètres géométriques (P1... Pn) ;
- la modification dudit troisième jeu de données (3) de manière à assigner ladite valeur de référence (9) modifiée audit au moins un parmi lesdits paramètres géométriques (P1... Pn) d'au moins deux parmi lesdits éléments de support (15).

4. Méthode selon la revendication 2 ou 3, **caractérisée en ce qu'**elle comprend les opérations suivantes :
- l'identification d'une pluralité de matériaux appropriés pour être utilisés pour produire ledit objet tridimensionnel (11) par le biais de la stéréolithographie ;
- la définition d'un cinquième jeu de données (5) contenant, pour chacun desdits matériaux, un jeu correspondant de valeurs de référence (10) prédéfinies pour lesdits paramètres géométriques (P1... Pn) ;
ladite génération dudit quatrième jeu de données (4) comportant la sélection d'un matériau appartenant à ladite pluralité de matériaux, et l'assignation des valeurs de référence (10) prédéfinies correspondant audit matériau audit quatrième jeu de données (4).

5. Méthode selon l'une quelconque des revendications précédentes, **caractérisée en ce qu'**elle comporte l'opération de stockage desdits premier jeu de données (1), deuxième jeu de données (2) et troisième jeu de données (3) dans un support à mémoire d'un ordinateur.

6. Méthode selon l'une quelconque des revendications précédentes, **caractérisée en ce que** lesdits paramètres géométriques (P1... Pn) comprennent un ou plusieurs desdits paramètres suivants :
- dimension transversale d'un élément de support (15) ;
- rapport entre la dimension transversale d'un élément de support (15) et la longueur de l'élément de support (15) ;
- taille d'une sphère (16) définissant au moins une parmi les extrémités d'un élément de support (15) ;
- profondeur d'interpénétration (17) de ladite sphère (16) dans la première surface (13, 13a) correspondante ou dans la surface de référence (14, 14a) correspondante ;
- nombre maximal de ramifications (18) d'un élément de support (15) au niveau d'au moins une parmi lesdites extrémités ;
- inclinaison maximale (19) desdites ramifications (18) par rapport à la direction de développement (20) de l'élément de support (15).

7. Méthode selon l'une quelconque des revendications précédentes, **caractérisée en ce qu'**au moins une parmi lesdites surfaces de référence (14) est une surface dudit objet tridimensionnel (11).

8. Méthode selon l'une quelconque des revendications précédentes, **caractérisée en ce qu'**au moins une parmi lesdites surfaces de référence (14a) est une surface qui est distincte dudit objet tridimensionnel (11).

9. Méthode selon la revendication 8, **caractérisée en ce que** ledit calcul dudit deuxième jeu de données (2) comprend les opérations suivantes :
- la définition d'une base de support (21) comprenant ladite au moins une surface de référence (14, 14a) ;
- le calcul dudit deuxième jeu de données (2) de façon à ce qu'il soit représentatif de la géométrie résultant de l'union dudit objet tridimensionnel (11), de ladite pluralité d'éléments de support (15) et de ladite base de support (21).

10. Système pour fabriquer un objet tridimensionnel (11), le système comprenant un équipement pour générer une représentation numérique d'un objet tridimensionnel (11) devant être fabriqué par le biais de la stéréolithographie, l'équipement comprenant :
- un ordinateur comprenant une unité de traitement et un support à mémoire accessible à ladite unité de traitement ;
- des moyens pour acquérir un premier jeu de données (1) représentatif de la géométrie dudit objet tridimensionnel (11) et pour charger ledit premier jeu de données dans ledit support à mémoire ;
- des moyens pour définir une ou plusieurs premières surfaces (13, 13a) dudit objet tridimensionnel (11) et une ou plusieurs surfaces de référence (14, 14a) faisant face à chacune desdites premières surfaces (13, 13a) ;
- des moyens pour définir une pluralité d'éléments de support (15) reliant chacune desdites premières surfaces (13, 13a) auxdites une ou plusieurs surfaces de référence (14, 14a) correspondantes ;
- des moyens pour calculer un deuxième jeu de données (2) de façon à ce qu'il soit représentatif de la géométrie résultant de l'union dudit objet tridimensionnel (11) et de ladite pluralité d'éléments de support (15) et pour charger ledit deuxième jeu de données dans ledit support à mémoire ;
dans lequel lesdits moyens pour définir ladite pluralité d'éléments de support (15) comprennent des moyens pour définir, pour chacun desdits éléments de support (15), un premier point (X1) correspondant dudit élément de support (15) sur la première surface (13, 13a) correspondante et un deuxième point (X2) correspondant dudit élément de support (15) sur la surface de référence (14, 14a) correspondante ; dans lequel
lesdits moyens pour définir ladite pluralité d'éléments de support (15) comprennent :
- des moyens pour définir, pour chacun desdits éléments de support (15), un ou plusieurs paramètres géométriques (P1... Pn) correspondants appropriés pour définir complètement, en association avec ledit premier point (X1) correspondant et ledit deuxième point (X2), une configuration tridimensionnelle desdits éléments de support (15) ;
- des moyens pour générer un troisième jeu de données (3) contenant des coordonnées dudit premier point (X1) et dudit deuxième point (X2) et des valeurs (8) desdits paramètres géométriques (P1... Pn) de chacun et de la totalité desdits éléments de support (15), et pour charger ledit troisième jeu de données dans ledit support à mémoire ;
- des moyens pour mettre ledit troisième jeu de données (3) à la disposition d'un opérateur pour une modification avant ledit calcul dudit deuxième jeu de données (2) ;
- ladite modification comprend
des moyens pour permettre à un opérateur de modifier ledit troisième jeu de données (3) de manière à modifier les valeurs (8) d'un ou plusieurs paramètres géométriques (P1... Pn) correspondant à au moins un élément de support (15) de ladite pluralité d'éléments de support (15) indépendamment des paramètres géométriques (P1... Pn) correspondant aux autres éléments de support (15) ;
lesdits moyens pour calculer ledit deuxième jeu de données (2) comprenant des moyens pour générer une représentation numérique de chaque élément de support (15) sur la base dudit troisième jeu de données (3) modifié et de la génération d'une représentation numérique de la géométrie dudit objet tridimensionnel (11) sur la base du premier jeu de données (1),
l'équipement comprend en outre des moyens pour calculer un sixième jeu de données (6) représentatif d'une pluralité de coupes transversales bidimensionnelles et mutuellement parallèles (22) de l'objet tridimensionnel représenté par ledit deuxième jeu de données (2) ;
le système comprend en outre une machine de stéréolithographie pour utiliser ledit sixième jeu de données (6) de façon à obtenir une pluralité de couches solides correspondant respectivement à ladite pluralité de coupes transversales bidimensionnelles et mutuellement parallèles (22), dans lequel l'objet tridimensionnel (11) est fabriqué par le biais d'une superposition séquentielle de ladite pluralité de couches solides.

11. Produit programme d'ordinateur comprenant un support de données doté de parties de programme configurées de façon à ce que, lorsqu'elles sont exécutées sur un ordinateur et une machine de stéréolithographie, elles amènent ledit ordinateur et ladite machine de stéréolithographie à mettre en œuvre, respectivement, les étapes de la méthode selon l'une quelconque des revendications 1 à 9.
